(19) Europäisches Patentamt
European Patent Office
Office européen des brevets

(11) Veröffentlichungsnummer: **0 274 356 B1**

# (12) EUROPÄISCHE PATENTSCHRIFT

(45) Veröffentlichungstag der Patentschrift: **16.05.90**

(51) Int. Cl.⁵: **C09B 1/467,** D06P 1/22

(21) Anmeldenummer: **87810784.6**

(22) Anmeldetag: **30.12.87**

(54) **Verküpbare 2-Aryl-4,6-diaminopyrimidine.**

(30) Priorität: **09.01.87 CH 67/87**

(43) Veröffentlichungstag der Anmeldung: **13.07.88 Patentblatt 88/28**

(45) Bekanntmachung des Hinweises auf die Patenterteilung: **16.05.90 Patentblatt 90/20**

(84) Benannte Vertragsstaaten: **CH DE FR GB IT LI**

(56) Entgegenhaltungen:
**DE-A- 1 906 841**
**DE-C- 569 796**
**FR-A- 2 039 374**

(73) Patentinhaber: **CIBA-GEIGY AG, Klybeckstrasse 141, CH-4002 Basel(CH)**

(72) Erfinder: **Altermatt, Hans, Dr., Schönenbachstrasse 22, CH-4153 Reinach(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft verküpbare 2-Acryl-4,6-diamino-pyrimidine, Verfahren zu ihrer Herstellung und ihre Verwendung als Küpenfarbstoffe.

In der DE-A1 906 841 sind Küpenfarbstoffe beschrieben, deren verküpbare Anthrachinon- oder Anthronreste über einen Triazin- oder Pyrimidinring verbunden sind, der einen in 2-Stellung über eine NH-Gruppe, ein S- oder ein O-Atom gebundenen Benzthiazol-, Benzoxazol- oder Benzimidazolrest enthält.

Die erfindungsgemässen Pyrimidinverbindungen entsprechen der allgemeinen Formel

(1) 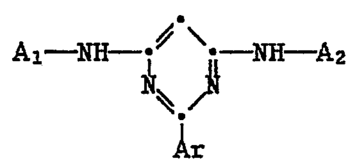

in der

$A_1$ und $A_2$ gleiche oder voneinander verschiedene verküpbare Reste, die sich von einer polycyclischen chinoiden Verbindung ableiten und

Ar einen Arylrest bedeuten.

Die verküpbaren Reste $A_1$ und $A_2$ leiten sich von polycyclischen chinoiden Verbindungen mit vorzugsweise 3 bis 6 ankondensierten Ringen ab, wie z.B. Anthrachinone, Phthaloylacridone, Anthrone, Benzanthrone, Anthanthrone, Anthrimide, Anthrapyridine, Anthrapyrimidine, Anthrapyridone, Anthrapyrimidone, Azabenzanthrone, Isothiazolanthrone oder Pyrazolanthrone. Dabei sind die Anthrachinone und Phthyloylacridone bevorzugt.

Alle obigen verküpbaren Reste können die üblichen Substituenten enthalten. Solche Substituenten sind beispielsweise Halogen, Trifluormethyl, Niederalkyl, Niederalkoxy, Niederalkylthio, Niederalkylcarbonyl, Niederalkoxycarbonyl, Amino, Mononiederalkylamino, Diniederalkylamino, Acylamino, Phenyl, Phenylamino, Phenyloxy oder Phenylthio.

Der Arylrest Ar ist beispielsweise Phenyl, Biphenylyl oder Naphthyl. Diese Arylreste können durch Halogen, Hydroxy, Cyano, Nitro, Niederalkyl, Niederalkoxy, Niederalkylcarbonyl oder Niederalkoxycarbonyl substituiert sein. Ar ist vorzugsweise Phenyl, Chlorphenyl, Bromphenyl, Methoxyphenyl, Tolyl oder Xylyl.

Niederalkyl, Niederalkylthio und Niederalkoxy stellen in der Regel solche Gruppen oder Gruppenbestandteile dar, die 1 bis 5, insbesondere 1 bis 3 Kohlenstoffatome aufweisen. Beispiele für derartige Gruppen sind Methyl, Ethyl, n-Propyl, Isopropyl, n-butyl, sek.Butyl, tert.Butyl, Amyl oder Isoamyl bzw. Methoxy, Ethoxy, Isopropoxy, Isobutoxy, tert.Butoxy oder tert.Amyloxy bzw. Methylthio, Ethylthio, Propylthio oder Butylthio.

In Acylamino ist "Acyl" besonders Formyl, Niederalkylcarbonyl, wie z.B. Acetyl oder Propionyl, oder vor allem Benzoyl. Weitere Acylbestandteile können Niederalkylsulfonyl, wie z.B. Methylsulfonyl oder Ethylsulfonyl sowie Phenylsulfonyl sein. Benzoyl und Phenylsulfonyl können durch Halogen, Methyl, Methoxy, Ethoxy oder Phenyl substituiert sein. Als Acylamino kann auch Thiophencarbonylamino in Betracht kommen.

Halogen bedeutet beispielsweise Fluor, Brom oder vorzusweise Chlor.

Bevorzugte chinoide 2-Aryl-4,6-diaminopyrimidine entsprechen der Formel

(2) 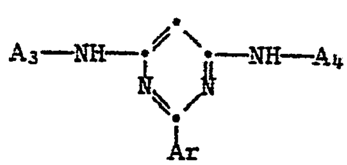

in der Ar die angegebene Bedeutung hat und $A_3$ und $A_4$, unabhängig voneinander, je einen unsubstituierten oder substituierten, in 2-Stellung gebundenen 3,4-Phthaloylacridonylrest oder einen unsubstituierten oder substituierten, in 1- oder 2-Stellung gebundenen Anthrachinonylrest darstellen.

Sowohl der Anthrachinonylrest als auch der Phthaloylacridonylrest können einen oder mehrere Substituenten aufweisen.

Als Substituenten können sie Halogene, Niederalkyl-, Niederalkoxy-, Niederalkylcarbonyl- oder Niederalkoxycarbonylrest, Amino, Mononiederalkylamino-, Diniederalkylamino- oder Acylaminogruppen oder auch ankondensierte Benzolringe enthalten.

Unter den Pyrimidinverbindungen der Formel (2) sind von besonderer Bedeutung solche, worin $A_3$ und $A_4$ den 3,4-Phthaloylacridonylrest oder einen unsubstituierten oder durch Halogen, Niederalkyl, Niederalkoxy, Niederalkylcarbonyl oder Acylamino substituierten und in 1-Stellung gebundenen Anthrachinonylrest bedeuten.

Praktisch wichtige verküpbare Pyrimidinderivate entsprechen der Formel

(3) 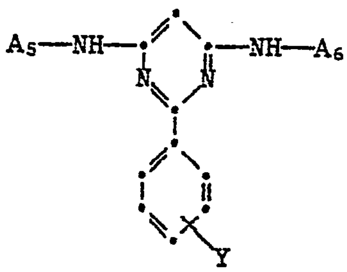

worin
$A_5$ und $A_6$ je einen 1-Anthrachinonylrest, der unsubstituiert oder durch Halogen, Methyl, Methoxy, Acetyl, Acetylamino oder Benzoylamino substituiert ist oder einen in 2-Stellung gebundenen 3,4-Phthaloylacridonylrest und Y Wasserstoff, Brom, Chlor, Methyl oder Methoxy bedeuten.

Die Pyrimidinderivate der Formel (1) werden hergestellt, indem man eine 2-Aryl-4,6-diaminopyrimidinverbindung der Formel

(4) 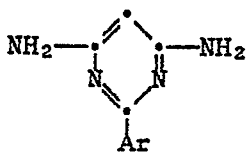

worin Ar die angegebene Bedeutung hat, mit verküpbaren Verbindungen der Formeln

(5) $A_1$-$Hal_1$ und $A_2$-$Hal_2$ (6)

worin $A_1$ und $A_2$ die angegebene Bedeutung haben und $Hal_1$ und $Hal_2$, unabhängig voneinander, je ein Halogenatom, wie z.B. Fluor oder vorzugsweise Brom oder Chlor bedeuten, umsetzt.

Die Umsetzung der 2-Aryl-4,6-diaminopyrimidinverbindung mit den Verküpbaren Verbindungen der Formeln (5) und (6) kann in ein- oder zweistufiger Reaktion ausgeführt werden.

Die Umsetzung erfolgt zweckmässig in Anwesenheit eines säurebindenden Mittels, wie z.B. eines Alkalimetallhydroxides, Alkalimetallhydrogencarbonates, Alkalimetallcarbonates oder einer tertiären Stickstoffbase, wie z.B. Pyridin oder Trialkylaminen und in Gegenwart einer Kupferverbindung als Katalysator, wie z.b. Kupfer(I)chlorid, Kupfer(I)bromid, Kupfer(I)iodid oder vor allem einer Additionsverbindung dieser Metallhalogenide und einer tertiären Stickstoffbase, wie z.B. Triethylamin, N-Methylpiperidin oder besonders Pyridin. Bevorzugter Katalysator ist der Kupfer(I)iodid-Pyridinkomplex, wie er in der DE-C-1 795 102 beschrieben ist.

Die Reaktion findet vorzugsweise in einem inerten, hochsiedenden organischen Lösungsmittel und bei erhöhter Temperatur, beispielsweise zwischen 110 bis 230°C, vorzugsweise bei 150 bis 200°C statt.

Als Lösungsmittel eignen sich insbesondere Nitrobenzol oder Chlorbenzol, wie Dichlorbenzol oder Trichlorbenzol. Nitrobenzol ist bevorzugt.

Als 2-Aryl-4,6-diaminopyrimidine, die als Ausgangsstoffe der Formel (4) in Betracht kommen können, seien beispielsweise erwähnt 2-Phenyl-4,6-diaminopyrimidin, 2-(p-Tolyl)-4,6-diaminopyrimidin, 2-(2′-Methoxyphenyl)-4,6-diaminopyrimidin, 2-(3′-Chlorphenyl)-4,6-diaminopyrimidin, 2-(4′-Bromphenyl)-4,6-diaminopyrimdin, 2-(2′-Hydroxynaphthyl-1′)-4,6-diaminopyrimidin, 2-Biphenylyl-4,6-diaminopyrimidin oder 2-(Naphthyl-1′)-4,6-diaminopyrimidin.

Als verküpbare Halogenverbindungen der Formeln (5) und (6) kommen insbesondere solche in Frage, worin die Halogenatome $Hal_1$ und $Hal_2$ Chlor oder Brom sind. Als geeignete verküpbare Halogenverbindungen der Formeln (5) und (6) sind zu nennen:
1-Chloranthrachinon, 1,3-Dichloranthrachinon, 1,6-Dichloranthrachinon, 1,8-Dichloranthrachinon, 1-Bromanthrachinon, 1,5-Dibromanthrachinon, 1,8-Dibromanthrachinon, 2-Chloranthrachinon, 2,6-Dichloranthrachinon, 2,7-Dichloranthrachinon, 2-Bromanthrachinon, 2,6-Dibromanthrachinon, 2,7-Dibromanthrachinon, 1-Chlor-5-acetylaminoanthrachinon, 1-Chlor-4-benzoylaminoanthrachinon, 1-Chlor-4-(p-chlorbenzoylamino)-anthrachinon, 1-Brom-4-benzoylaminoanthrachinon, 1-Brom-4-(4′-phenylbenzoylamino)-anhtrachinon, 1-Chlor-5-benzoylaminoanthrachinon, 1-Chlor-5-(p-chlorbenzoylamino)-anthrachinon, 1-Brom-5-benzoylaminoanthrachinon, 1-Chlor-2-methylaminoanthrachinon, 1-Chlor-4-methylanthrachinon, 1-Chlor-4-methoxyanthrachinon, 1-Brom-2-methoxyanthrachinon, 1-Brom-4-methoxyanthrachinon, 1-Chlor-3-acetyl-4-amino-anthrachinon, 1-Chlor-4-anilinoanthrachinon, 1-Chlor-4-phenylthio-anthrachinon, 1-Chlor-5-phenylthio-anthrachinon, 2-Chlor-3,4-phthaloylacridon, 2,5,7-Trichlor-3,4-phthaloylacridon, Dichloranthanthron, Dibromanthanthron.

Die erfindungsgemässen substituierten Pyrimidinverbindungen der Formel (1) sind farbig und stellen Küpenfarbstoffe dar, welche sich zum Färben oder Bedrucken der verschiedensten Materialien in orangen, roten oder violetten Tönen eignen. Insbesondere finden die neuen Küpenfarbstoffe Verwendung zum Färben oder Bedrucken von Fasern aus natürlichen oder regenerierten Cellulosefasern in Gegenwart von üblichen Reduktionsmitteln, wie z.B. Dithionit. Die Farbstoffe zeigen ein sehr gutes Aufbauvermögen. Die Echtheiten sind allgemein sehr gut, insbesondere die Licht-, Wasser-, Chlor- und Sodakochechtheiten.

Gegenüber den entsprechenden verküpbaren Verbindungen, die anstelle des zentralen Pyrimidinrestes einen Triazinrest enthalten, zeichnen sich erfindungsgemässe verküpbare 2-Arylpyrimidinverbindungen überraschenderweise durch einen bathochromen Effekt aus.

Die neuen Produkte können auch als Pigmente verwendet werden. Dank ihrer günstigen Eigenschaften können sie für die verschiedensten Pigmentapplikationen eingesetzt werden, z.B. in feinverteilter Form zum Färben von Kunstseide, Viscose oder Celluloseethern oder -estern oder von Superpolyamiden bzw. Superpolyurethanen oder Polyestern in der Spinnmasse, sowie zur Herstellung von gefärbten Lacken oder Lackbildnern, Lösungen oder Produkten aus Acetylcellulose. Nitrocellulose, natürlichen Harzen oder Kunstharzen, wie Polymerisationsharzen oder Kodensationsharzen, z.B. Aminoplasten, Alkydharzen, Phenoplasten, Polyolefinen, wie Polystyrol, Polyvinylchlorid, Polyethylen, Polypropylen, Polyacrylnitril, Gummi, Casein, Silikon oder Silikonharzen.

In den folgenden Beispielen bedeuten die Teile, sofern nichts anderes angegeben ist, Gewichtsteile, die Prozente Gewichtsprozente.

Beispiel 1:

In 60 ml Nitrobenzol werden 1,9 g 4,6-diamino-2-phenylpyrimidin, 8,5 g 1-Brom-4-benzoylaminoanthrachinon und 2,5 g kalz. Natriumcarbonat eingetragen. Nach der Zugabe einer Lösung aus 0,3 g Kupfer-(I)-iodid in 2 ml Pyridin wird unter Rühren auf 180°C erwärmt, worauf das Reaktionsgemisch nach 6 Stunden auf 70°C abgekühlt wird. Hierauf wird der Niederschlag abfiltriert und mit Nitrobenzol gewaschen. Das Rohprodukt wird zuerst mit Methanol, dann mit Wasser gewaschen und anschliessend mit 5%iger Salpetersäure ausgekocht. Nach dem Trocknen erhält man 5,2 g einer violetten Verbindung der Formel

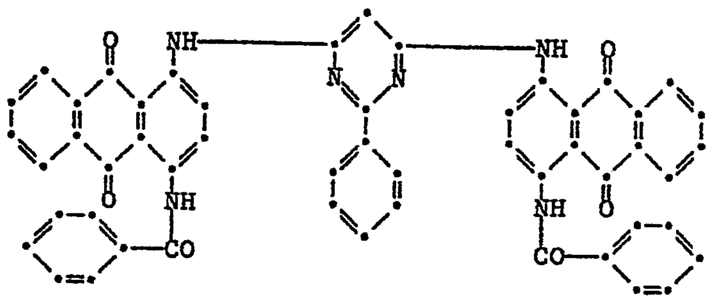

(11)

Das Produkt färbt aus der Küpe Baumwolle in violetten Tönen.

Beispiel 2:

Wird in Beispiel 1 das 1-Brom-4-benzoylaminoanthrachinon durch 7,6 g 1-Chlor-5-benzoylaminoanthrachinon ersetzt, so werden 5,8 g einer organgeroten Verbindung der Formel

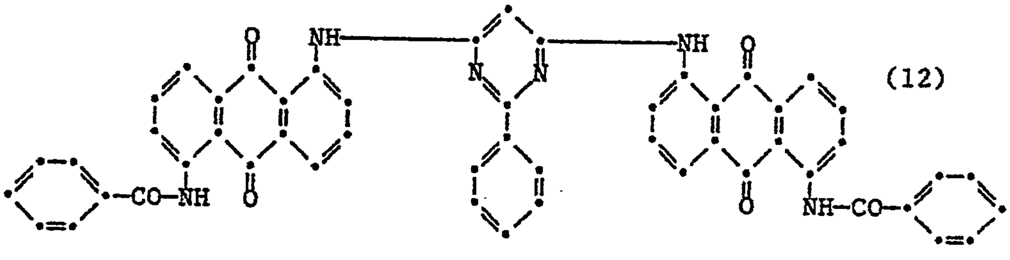

(12)

erhalten. Dieses Produkt färbt aus der Küpe Baumwolle in orangeroten Tönen.

Beispiel 3:

Wird in Beispiel 1 das 1-Brom-4-benzoylaminoanthrachinon durch 8,4 g 2-Brom-3,4-phthaloylacridon ersetzt, so werden 5,4 g einer blauen Verbindung der Formel

(13)

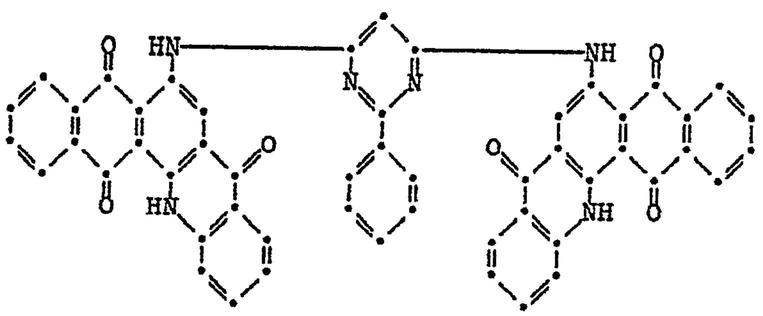

erhalten. Diese Verbindung färbt Baumwolle nach der Küpenmethode in grünstichig blauen Tönen.

Beispiel 4:

In 75 ml Nitrobenzol werden, 0,3 g Kupferpulver, 0,6 g Jod und 7,5 ml Pyridin eingetragen und 1 Stunde bei 90°C verrührt. Hierauf werden 325 ml Nitrobenzol, 50 g 1-Chloranthrachinon, 18,6 g 4,6-Diamino-2-phenylpyrimidin zugegeben. Das Reaktionsgemisch wird auf 180°C aufgeheizt und während 6 Stunden bei dieser Temperatur gerührt. Nach dem Abkühlen wird der Niederschlag wie in Beispiel 1 beschrieben aufgearbeitet.

Man erhält 37 g einer orangen Verbindung der Formel

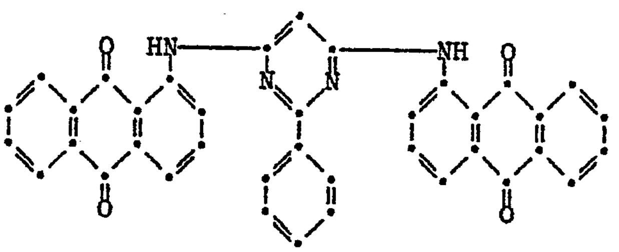

(14)

Diese Verbindung färbt Baumwolle nach der Küpenmethode in orangen Tönen.

Verwendet man in den Beipsielen 1 bis 4 anstelle des 4,6-Diamino-2-phenylpyrimidins die entsprechende Menge von 4,6-Diamino-2-(4'-methylphenyl-)pyrimidin, so erhält man Farbstoffe, die Baumwolle aus der Küpe jeweils in demselben Ton färben.

Wird in den Beispielen 1 bis 4 das 4,6-Diamino-2-phenylpyrimidin durch die entsprechende Menge von 4,6-Diamino-2-(4'-bromphenyl-)-pyrimidin ersetzt, so werden weitere Farbstoffe erhalten, die jeweils Baumwolle aus der Küpe in einem leicht hypsochromen Ton färben.

Färbevorschrift

1 g des Farbstoffes der Formel (11) wird mit 10 ml einer wässerigen Natriumhydroxidlösung von 36° Bé und 5 g Natriumdithionit in 200 g Wasser bei 50 bis 70°C verküpt. Einem Färbebad, das in 2000 g Wasser 5 ml der Natriumhydroxidlösung von 36° Bé und 3,7 g Natriumdithionit enthält, gibt man die obige Stammküpe zu und geht bei 50°C mit 100 g Baumwolle ein. Nach 10 Minuten gibt man 15 g Natriumchlorid zu, nach 20 Minuten weitere 15 g und färbt bei 40° C während 45 Minuten. Hierauf wird die Baumwolle abgequetscht, oxidiert und wie üblich fertiggestellt. Man erhält eine echte violette Färbung.

Pigmentfärbung:

5 g des gemäss Beispiel 4 erhaltenen Farbstoffes der Formel (14) werden mit 95 g Dioctylphthalat vermischt und in einer Kugelmühle solange vermahlen, bis die Farbstoffteilchen kleiner als 3μ sind.

0,8 g dieser Dioctylphthalatpaste werden mit 13 g Polyvinylchlorid, 7 g Dioctylphthalat und 0,1 g Cadmiumstearat vermischt und hierauf 5 Minuten auf dem Zweiwalzenstuhl bei 140°C ausgewalzt. Man erhält ein orange gefärbtes Material mit guten Migrationseigenschaften und guter Lichtechtheit.

Lackfärbung:

10 g Titandioxyd und 2 g des gemäss Beispiel 1 hergestellten Pyrimidinderivates der Formel (11) werden mit einer Mischung von 26,4 g Kokosalkydharz, 24,0 g Melamin-Formaldehydharz (50 % Festkörpergehalt), 8,8 g Ethylenglykolmonomethylether und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120°C eingebrannt, dann erhält man eine klare violette Lackierung, die sich bei guter Farbstärke durch eine gute Ueberlackierechtheit, eine hervorragende Lichtechtheit und gute Wetterechtheit auszeichnet.

**Patentansprüche**

1. Verküpbare 2-Aryl-4,6-diaminopyrimidinverbindungen der Formel

(1) 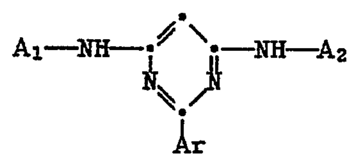

in der

$A_1$ und $A_2$ gleiche oder voneinander verschiedene verküpbare Reste, die sich von einer polycyclischen chinoiden Verbindung ableiten und Ar einen Arylrest bedeuten.

2. Pyrimidinverbindungen gemäss Anspruch 1, dadurch gekennzeichnet, dass sie der Formel

(2) 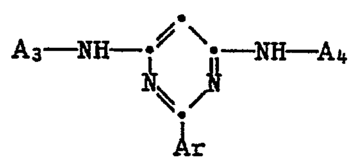

entsprechen, worin Ar die im Anspruch 1 angegebene Bedeutung hat und $A_3$ und $A_4$, unabhängig voneinander, je einen unsubstituierten oder substituierten, in 2-Stellung gebundenen 3,4-Phthaloylacridonylrest oder einen unsubstituierten oder substituierten, in 1- oder 2-Stellung gebundenen Anthrachinonylrest darstellen.

3. Pyrimidinverbindungen gemäss Anspruch 2, dadurch gekennzeichnet, dass in Formel (2) $A_3$ und $A_4$ den 3,4-Phthaloylacridonylrest oder einen unsubstituierten oder durch Halogen, Niederalkyl, Niederalkoxy, Niederalkylcarbonyl oder Acylamino substituierten und 1-Stellung gebundenen Anthrachinonylrest bedeuten, wobei der Ausdruck "Nieder" sich auf solche Gruppen mit 1 bis 5 Kohlenstoffatomen bezieht.

4. Pyrimidinverbindungen gemäss Anspruch 1, dadurch gekennzeichnet, dass sie der Formel

(3) 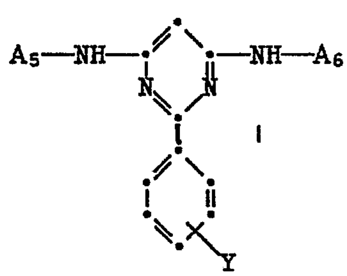

entsprechen, worin

$A_5$ und $A_6$ je einen 1-Anthrachinonylrest, der unsubstituiert oder durch Halogen, Methyl, Methoxy, Acetyl, Acetylamino oder Benzoylamino substituiert ist oder einen in 2-Stellung gebundenen 3,4-Phthaloylacridonylrest und Y Wasserstoff, Brom, Chlor, Methyl oder Methoxy bedeuten.

5. Verfahren zur Herstellung von verküpbaren 2-Aryl-4,6-diaminopyrimidinverbindungen der in Anspruch 1 angegebenen Formel (1), dadurch gekennzeichnet, dass man eine 2-Aryl-4,6-diaminopyrimidinverbindung der Formel

(4) 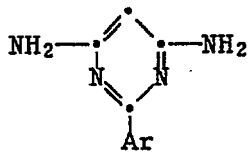

worin Ar die im Anspruch 1 angegebene Bedeutung hat, mit verküpbaren Verbindungen der Formeln

(5) $A_1—Hal_1$ und $A_2—Hal_2$ (6)

worin $A_1$ und $A_2$ die im Anspruch 1 angegebene Bedeutung haben und $Hal_1$ und $Hal_2$, unabhängig voneinander, je ein Halogenatom bedeuten, umsetzt.

6. Verwendung der verküpbaren 2-Aryl-4,6-diaminopyrimidinverbindungen gemäss Anspruch 1 als Küpenfarbstoffe zum Färben oder Bedrucken von Textilfasern aus natürlicher oder regenerierter Cellulose.

## Claims

1. A vattable 2-aryl-4,6-diaminopyrimidine compound of formula

(1) 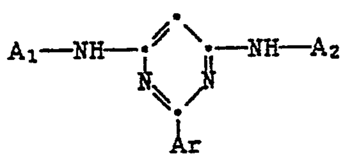

in which
$A_1$ and $A_2$ are identical or different vattable radicals which are derived from a polycyclic quinoid compound, and
Ar is an aryl radical

2. A pyrimidine compound according to claim 1, which corresponds to the formula

(2) 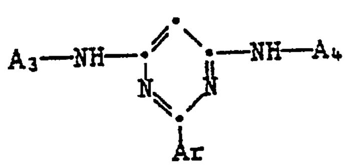

in which Ar is as defined in claim 1 and $A_3$ and $A_4$ are each independently of the other an unsubstituted or substituted 3,4-phthaloylacridonyl radical which is attached in the 1- or 2-position.

3. A pyrimidine compound according to claim 2, wherein $A_3$ and $A_4$ in formula (2) are the 3,4-phthaloylacridonyl radical or an anthraquinonyl radical which is unsubstituted or substituted by halogen, lower alkyl, lower alkoxy, lower alkylcarbonyl or acylamino and is attached in the 1-position, the term "lower" referring to those groups having 1 to 5 carbon atoms.

4. A pyrimidine compound according to claim 1, which corresponds to the formula

(3) 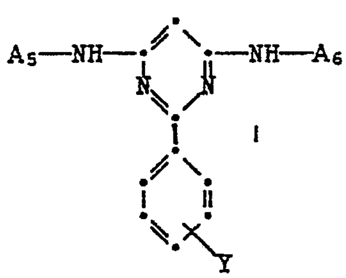

in which $A_5$ and $A_6$ are each a 1-anthraquinonyl radical which is unsubstituted or substituted by halogen, methyl, methoxy, acetyl, acetylamino or benzoylamino, or a 3,4-phthaloylacridonyl radical which is attached in the 2-position, and Y is hydrogen, bromine, chlorine, methyl or methoxy.

5. A process for the preparation of a vattable 2-aryl-4,6-diamino pyrimidine compound of the formula (1) given in claim 1, which comprises reacting a 2-aryl-4,6-diaminopyrimidine compound of the formula

(4) 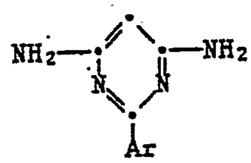

in which Ar is as defined in claim 1, with a vattable compound of the formula

(5) $A_1—Hal_1$ and $A_2—Hal_2$ (6)

in which $A_1$ and $A_2$ are as defined in claim 1 and $Hal_1$ and $Hal_2$ are each independently of the other a halogen atom.

6. The use of a vattable 2-aryl-4,6-diaminopyrimidine compound according to claim 1 as a vat dye for dyeing or printing textile fibres made from natural or regenerated cellulose.

**Revendications**

1. Composés 2-aryl-4,6-diaminopyrimidines cuvables, de formule

(1) 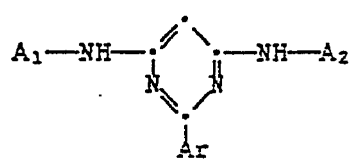

dans laquelle $A_1$ et $A_2$ représentent des restes cuvables, identiques ou différents l'un de l'autre et dérivant d'un composé quinoïde polycyclique, et Ar représente un groupe aryle.

2. Composés pyrimidines conformes à la revendication 1, caractérisés en ce qu'il correspondent à la formule

(2) 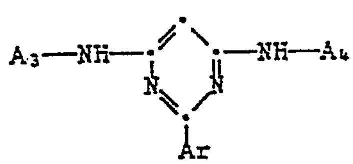

dans laquelle Ar a la signification indiquée dans la revendication 1 et $A_3$ et $A_4$, indépendamment l'un de l'autre, représentent chacun un reste 3,4-phtaloylacridonyle, substitué ou non, lié en position 2, ou bien un reste anthraquinonyle substitué ou non, lié en position 1 ou 2.

3. Composés pyrimidines conformes à la revendication 2, caractérisés en ce que, dans la formule (2), $A_3$ et $A_4$ représentent le reste 3,4-phtaloylacridonyle ou un reste anthraquinonyle lié en position 1 et non substitué ou substitué par des atomes d'halogène ou par des groupes alkyle inférieur, alcoxy inférieur, alkylcarbonyle inférieur ou acylamino, le terme "inférieur" désignant des groupes comportant de 1 à 5 atomes de carbone.

4. Composés pyrimidines conformes à la revendication 1, caractérisés en ce qu'ils correspondent à la formule

(3) 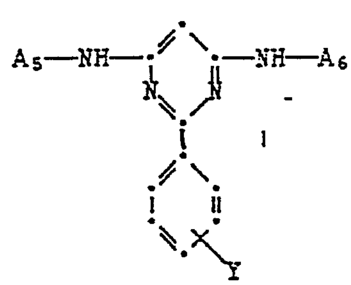

dans laquelle $A_5$ et $A_6$ représentent chacun un reste 1-anthraquinonyle, non substitué par des atomes d'halogène ou par des groupes méthyle, méthoxy, acétyle, acéthylamino ou benzoylamino, ou un reste 3,4-phtaloylacridonyle, lié en position 2, et Y représente un atome d'hydrogène, de brome ou de chlore ou un groupe méthyle ou méthoxy.

5. Procédé de préparation de composés 2-aryl-4,6-diaminopyrimidines cuvables de formule (1), indiquée dans la revendication 1, caractérisé en ce que l'on fait réagir un composé 2-aryl-4,6-diaminopyrimidine de formule

(4) 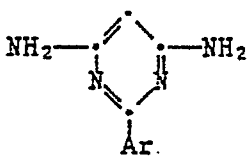

dans laquelle Ar a la signification indiquée dans la revendication 1, avec des composés cuvables de formules

(5) $A_1—Hal_1$ et $A_2—Hal_2$ (6)

dans lesquelles $A_1$ et $A_2$ ont la signification indiquée dans la revendication 1 et $Hal_1$ et $Hal_2$, indépendamment l'un de l'autre, représentent chacun un atome d'halogène.

6. Utilisation des composés 2-aryl-4,6-diaminopyrimidines cuvables conformes à la revendication 1 en tant que colorants de cuve pour la teinture ou l'impression de fibres textiles en cellulose naturelle ou régénérée.